# EUROPÄISCHE PATENTSCHRIFT

(11) **EP 0 870 582 B1**
(45) Veröffentlichungstag und Bekanntmachung des Hinweises auf die Patenterteilung: **27.12.2000**
(21) Anmeldenummer: 98103773.2
(22) Anmeldetag: 04.03.1998
(51) Int. Cl.: B26D 7/18, B23D 33/00, B23D 19/06, B65H 7/06

(54) **Verfahren, Vorrichtung und Schneideeinrichtung zum Ausscheiden einzelner Blechabschnitte aus einer Mehrzahl von Blechabschnitten**
Method and apparatus for removing bad products from a sheet cutting machine
Méthode et dispositif pour se débarasser de produits mauvais dans une machine à couper des tôles

(30) Priorität: 11.04.1997 CH 84997
(43) Veröffentlichungstag der Anmeldung: 14.10.1998
(73) Patentinhaber: ELPATRONIC AG, 8962 Bergdietikon (CH)
(72) Erfinder: Schreiber, Peter, 2563 Ipsach (CH); van der Schaar, Felix, 8832 Wilen (CH)

(56) Entgegenhaltungen:
- EP-A- 0 317 638
- DE-A- 3 617 920
- US-A- 2 672 931

## Beschreibung

Die Erfindung betrifft ein Verfahren gemäss Oberbegriff des Anspruchs 1, eine Vorrichtung gemäss Oberbegriff des Anspruchs 4 sowie eine Schneideeinrichtung gemäss Oberbegriff des Anspruchs 7.

Es ist bekannt, Blechtafeln in eine Mehrzahl von einzelnen Abschnitten zu schneiden z.B. mittels einer Winkelschere gemäss US-A-2 672 931, welche Abschnitte insbesondere zur Herstellung von Dosenzargen verwendet werden. Dazu werden die Abschnitte auf bekannte Weise gerundet und verschweisst. Die entsprechenden Blechtafeln sind bereits vor dem Schneiden bedruckt und/oder lakkiert, um der späteren Dose ein entsprechendes Aussehen zu verleihen. In denjenigen Bereichen der Blechtafel, die später den Schweissnahtbereich der Dose bilden, darf indes keine Bedruckung und/oder Lackierung vorhanden sein, da ansonsten die Schweissbarkeit nicht gegeben ist. Das Schneiden der Tafeln zu den Abschnitten erfolgt auf bekannten Schneideeinrichtungen. Wird nun von der Bedienungsperson ein Fehler in der Bedruckung und/oder Lackierung einer Tafel, oder am Ende des Vorgangs eines Abschnittes, festgestellt, so wird heutzutage die Schneideinrichtung abgestellt und die betroffenen Tafeln, Streifen oder Abschnitte werden von Hand entfernt. Häufig sind mehrere aufeinanderfolgende Tafeln betroffen. Die entsprechenden Arbeiten sind zeitaufwendig und damit kostspielig, da sie zu längerem Stillstand der Schneideeinrichtung führen. Ferner ergibt die Entfernung ganzer Tafeln einen unnötigen Materialverbrauch.

Aus DE-A-36 17 920 ist eine Maschine zur Bildung von Wellpappebogen bekannt, bei welcher der kontinuierliche Wellpappenstrang in einzelne Bögen geschnitten wird. Am Ende der Schneidmaschine ist eine Förderwegweiche vorgesehen, welche einen einzelnen Bogen aus der Reihenfolge der Bögen aussondern kann, wenn mittels Sensoren ein fehlerhafter Bogen festgestellt worden ist. Vor der Schneideinrichtung ist ein Druckknopf vorgesehen, mittels welchem ein einzelner Bogen ausgeschieden werden kann. EP-A-0 317 638 zeigt das Sortieren von Glasabschnitten abhängig von deren Fehlerstellen.

Der Erfindung liegt daher die Aufgabe zugrunde, ein Verfahren und eine Vorrichtung zum Ausscheiden von Abschnitten von Blechtafeln bzw. eine Schneideeinrichtung zu schaffen, die die genannten Nachteile nicht aufweisen.

Diese Aufgabe wird bei dem eingangs genannten Verfahren mit den kennzeichnenden Merkmalen des Anspruchs 1 gelöst und bei der eingangs genannten Vorrichtung mit den kennzeichnenden Merkmalen des Anspruchs 4 bzw. bei der eingangs genannten Schneideeinrichtung mit den Merkmalen des Anspruchs 7.

Dadurch, dass von allen Abschnitten der Tafel sowohl einer wie auch mehrere durch die Bedienungsperson an der Steueranordnung auswählbar ist, und dass für jeden Abschnitt eine steuerbare Förderwegweiche vorgesehen ist, kann jeder fehlerhafte Abschnitt im Betrieb ohne Maschinenstillstand ausgeschieden werden; die Entfernung ganzer Tafeln wird unnötig, und damit wird ein hoher Materialverbrauch vermieden.

Im folgenden werden Ausführungsbeispiele der Erfindung anhand der Zeichnungen näher erläutert. Dabei zeigt
Figur 1 eine schematische Darstellung des Schneidens von Blechtafeln zu Blechabschnitten;
Figur 2 ein Beispiel des Bedienungsfeldes für die Bedienungsperson; und
Figur 3 ein Ausführungsbeispiel für eine Förderwegweiche.

Nachfolgend wird die Erfindung anhand einer Blechschneideeinrichtung beschrieben, in welcher eine bestimmte Schneidreihenfolge erfolgt.

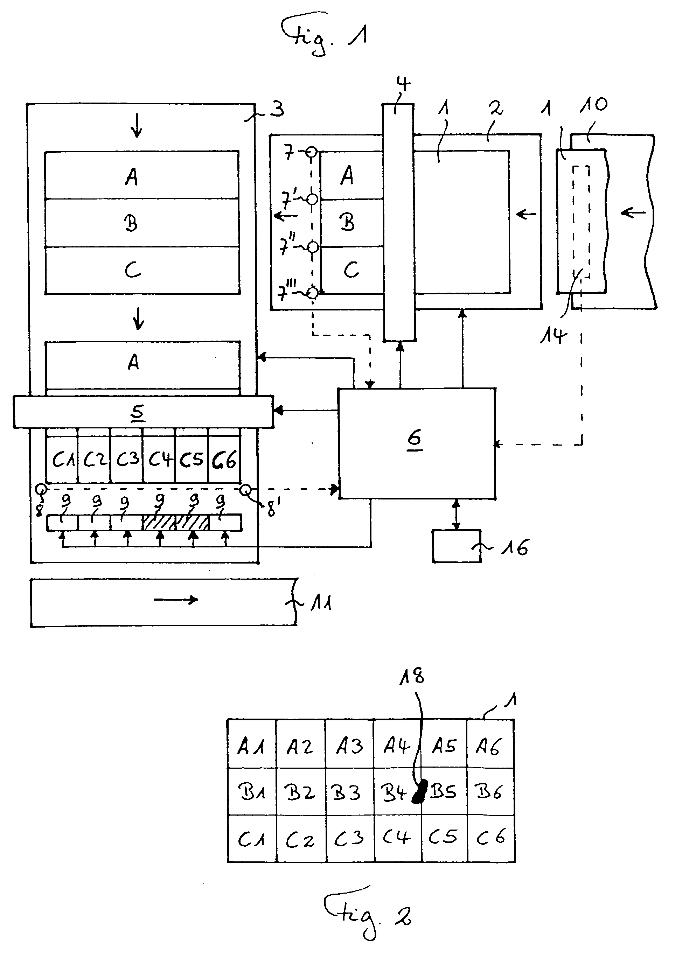

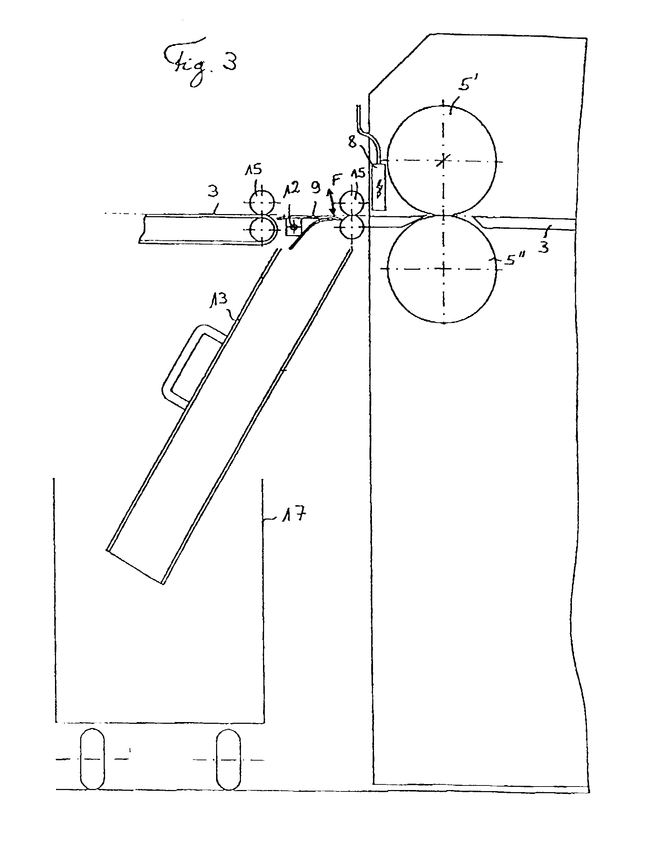

Figur 1 zeigt schematisch eine Schneideeinrichtung zum Schneiden von Blechtafeln in eine Mehrzahl von einzelnen Blechabschnitten. In der dargestellten Anordnung, bei welcher die Blechabschnitte die Schneideeinrichtung im rechten Winkel zu den zugeführten Blechtafeln verlassen, wird diese Schneideeinrichtung auch als Winkelschere bezeichnet. Im einzelnen ist in Figur 1 ersichtlich, dass die auf einer nicht zur Schneideeinrichtung gehörenden Förderanordnung 10 einzeln zugeführten Blechtafeln 1 von einer ersten Scherenanordnung 4 zu einzelnen Streifen A, B und C geschnitten werden. Die Tafeln 1 bzw. die Streifen A, B, C werden in der Schneideeinrichtung auf einer Förderanordnung mit einem ersten Fördermittel 2 durch die erste Schere 4 geführt. Eine solche Schere zum Zerteilen der Blechtafel 1 in die Blechstreifen A, B, C ist bekannt und wird hier nicht weiter erläutert. Die Blechstreifen gelangen nachfolgend innerhalb der Schneideeinrichtung auf ein weiteres zweites Fördermittel 3, welches die Streifen zu einer weiteren Schere 5 führt. Auch diese wird, da bekannt, nicht im Detail erläutert. In der Schere 5 werden die einzelnen Streifen A, B, C in eine Mehrzahl einzelner Abschnitte geschnitten. In Figur 1 ist dies für den Streifen C durch die Abschnitte C1, C2, C3, C4, C5 und C6 dargestellt. An der Ausgabestelle der Schneideeinrichtung werden die einzelnen Abschnitte von einem weiteren Fördermittel 11 übernommen, welches nicht mehr zur Schneideeinrichtung gehört, und welches die Abschnitte der weiteren Verwendung zuführt. Eine Steueranordnung 6 steuert sowohl die Förderanordnung 2, 3 als auch die Scheren 4, 5. Gemäss der Erfindung ist nun eine Anzahl Förderwegweichen 9 im Bereich der Ausgabestelle der Schneideeinrichtung vorgesehen, welche der Anzahl der Abschnitte entspricht. Diese Förderwegweichen, welche nachfolgend noch näher beschrieben werden, werden ebenfalls durch die Steuereinrichtung 6 gesteuert. Jede Förderwegweiche 9 kann den zugehörigen Abschnitt entweder in Richtung auf das weitere Fördermittel 11 durchlassen oder kann den Abschnitt aus diesem Förderweg ablenken und z.B. zu einer Sammelstelle leiten. In Figur 2 ist ersichtlich, wie eine Tafel 1 in die Abschnitte A1 - A6, B1 - B6 und C1 - C6 zerteilt wird. In dieser Form kann das Eingabemittel 16 der Steueranordnung 6 für die Bedienungsperson der Schneideeinrichtung vorgesehen sein, z.B. durch entsprechende Tasten an einer Schalttafel oder bevorzugterweise durch eine entsprechende Darstellung auf einem Bildschirm, der als berührungsempfindlicher Bildschirm ausgestaltet ist, so dass die Bedienungsperson durch Berühren des Bildschirms eine Eingabe in die Steueranordnung ausführen kann. In der Figur 2 ist weiter durch einen schwarzen Fleck 18 ein Fehler in der Bedruckung oder Lackierung einer Tafel 1 dargestellt. Dieser Fehler liegt auf denjenigen Teilen der Tafel 1, welche später die Abschnitte B4 und B5 bilden und der Fehler überdeckt den freizuhaltenden Schweissnahtbereich auf der Grenze der Abschnitte B4 und B5, welcher bei der späteren Schweissung von Dosenzargen aus den Abschnitten nicht bedruckt oder lackiert sein darf. Stellt die Bedienungsperson nun auf einer Tafel 1 einen solchen Fehler fest, so kann sie auf der Eingabeanordnung 16 für die Steueranordnung 6 die entsprechenden Felder B4 und B5 betätigen, so dass die Steueranordnung darüber orientiert ist, dass die entsprechenden Abschnitte durch die Förderwegweichen auszuwerfen sind. Es werden nach dem Schneiden der Tafel 1 in die Streifen A, B und C und nach dem weiteren Schneiden des Streifens B in die Abschnitte B1 - B6 bei der Ausgabe der entsprechenden B-Abschnitte im Ausgabebereich der Schneideeinrichtung die in Figur 1 schraffiert dargestellten Förderwegweichen 9 durch die Steueranordnung 6 betätigt, derart, dass die fehlerhaften Abschnitte B4 und B5 nicht auf das weitere Fördermittel 11 gelangen, sondern zu einer in der Figur 1 nicht dargestellten Sammelstelle für fehlerhafte Abschnitte. Da sich ein entsprechender Bedruckungsfehler häufig auf mehreren Tafeln gleichzeitig befindet, wird die Steuereinrichtung 6 bevorzugterweise auch bei den nachfolgenden Tafeln 1 jeweils die entsprechenden Abschnitte B4 und B5 aus dem normalen Förderweg ausscheiden. Wenn die Bedienungsperson die entsprechende Eingabe wieder zurücksetzt, werden die entsprechenden Förderwegweichen 9 durch die Steueranordnung 6 nicht mehr aktiviert, so dass auch die Abschnitte B4 und B5 den normalen Förderweg gehen. Die Erkennung von Bedruckungsfehlern kann auch durch oberhalb der zugeführten Tafeln 1 angeordnete Sensoren festgestellt werden und direkt der Steueranordnung mitgeteilt werden, so dass diesfalls kein Eingriff einer Bedienungsperson notwendig ist. In Figur 1 ist dies nur schematisch durch einen Sensor 14 dargestellt, welcher mit der Steueranordnung 6 verbunden ist. Der Sensor 14 kann z.B. von Fotozellen gebildet werden, welche jeweils die blanken, nicht bedruckten Stellen auf der Blechtafel kontrollieren. Der Sensor 14 könnte aber auch durch eine Kamera und eine Bildverarbeitungseinheit gebildet werden, welche ein Abbild der Tafel 1 auf entsprechende Fehler hin prüft.

In Figur 1 sind weiter bekannte Sensoren eingezeichnet, welche bei Winkelscheren bereits bisher gebräuchlich sind. Die Sensoren 7 am Ausgang der ersten Schere 4 prüfen, ob die Ränder der von der Schere 4 geschnittenen Streifen A, B, C korrekt geschnitten sind. Wenn dies für einen der Streifen nicht zutrifft, so wird der ganze Streifen oder es werden mehrere Streifen auf bekannte Weise ausgeschieden. Wenn der Sensor 7 aktiviert wird, so wird der Streifen A ausgeschieden mit allen zugehörigen Abschnitten. Wenn der Sensor 7' aktiviert wird, so werden die Streifen A und B ausgeschieden, bei der Aktivierung des Sensors 7" die Streifen B und C bzw. bei der Aktivierung des Sensors 7"' der Streifen C. Dieses ist bekannt und wird nicht weiter dargestellt. Die Sensoren 7-7"' können indes vorliegend auch so verwendet werden, dass die Steuereinrichtung nicht die Streifen A, B, C ausscheidet, sondern die Ausscheidung auf erfindungsgemässe Weisse mittels der Förderwegweichen 9 erfolgt. Dabei kann es genügen, nur einzelne Abschnitte auszuscheiden und nicht alle Abschnitte eines Streifens. Auf diese Weise kann die Streifenauswerfanordnung eingespart und es kann eine weitere Materialersparnis erzielt werden.

Ferner ist es bekannt, mittels Sensoren 8 und 8' zu prüfen, ob der in Abschnitte zerteilte Streifen nach der Schere 5 parallele Aussenkanten der beiden Abschnitte C1 und C6 aufweist. Wenn die beiden Sensoren eine Nichtparallelität anzeigen, wird der ganze Streifen bzw. werden alle Abschnitte 1-6 aus der Schneideeinrichtung ausgeworfen. Auch diese Prüfung und dieses Auswerfen ist bereits bekannt und wird hier nicht weiter dargestellt. Auch hierbei kann das Auswerfen mittels der Förderwegweichen 9 erfolgen, anstelle des bisher bekannten Auswerfens aller Abschnitte.

Figur 3 zeigt in teilweise geschnittener Seitenansicht ein Ausführungsbeispiel der Ausgabestelle für die Blechabschnitte. Ersichtlich sind zwei rotierende Schneiden 5' und 5" der Scherenanordnung 5 sowie das Fördermittel 3. Nach der Scherenanordnung 5 sind in diesem Beispiel die Förderwegweichen 9 angeordnet. Diese bestehen im gezeigten Beispiel aus einem Förderwegabschnitt, der um die Schwenkachse 12 in Richtung des Pfeiles F nach oben bzw. wieder nach unten schwenkbar ist. Die Schwenkbewegung wird z.B. elektromagnetisch oder pneumatisch ausgelöst und ist wie bereits erwähnt durch die Steueranordnung 6 gesteuert. In der in der Figur 3 dargestellten unteren Schwenkstellung gelangt der Blechabschnitt nach den Schneidrädern 5' und 5", in gerader Richtung durch die Walzen 15 angetrieben, auf den nächsten Abschnitt 3' des Fördermittels. In dieser Stellung werden die Blechabschnitte also normal aus der Schneideeinrichtung abgegeben. Wenn die Förderwegweiche nach oben geschwenkt ist, so wird das die Schneidräder verlassende Blech nach unten in den Fallschacht 13 abgelenkt und gelangt von dort in einen Vorratswagen 14. Die ausgeschiedenen Bleche werden also im Wagen 14 gesammelt. Wie bereits erwähnt kann die Einheit mit den Förderwegweichen als selbständige Vorrichtung ausgestaltet sein, welcher der Schneideinrichtung zur Bildung der Abschnitte nachgeschaltet wird.

## Patentansprüche

1. Verfahren zum Ausscheiden einzelner, bestimmter Blechabschnitte aus einer Mehrzahl von Blechabschnitten (A1-A6, B1-B6, C1-C6), die in einer Blechschneideeinrichtung (3,4,5) aus aufeinanderfolgenden Blechtafeln (1) derart gebildet werden, dass aus jeder Tafel (1) zunächst jeweils Blechstreifen (A, B, C) und aus diesen Blechstreifen nachfolgend die Abschnitte (A1-A6, B1-B6, C1-C6) geschnitten werden, dadurch gekennzeichnet, dass an einer Steueranordnung (6) mittels deren Eingabemittel (16) sowohl einer wie auch mehrere von allen aus jeder Tafel zu bildenden Abschnitte auswählbar ist bzw. sind, und dass beim Vorhandensein eines Fehlers (18) auf der Tafel (1) der oder die vom Fehler betroffenen Abschnitte (B4, B5) mittels des Eingabemittels (16) ausgewählt werden, und dass die Steueranordnung die ausgewählten Abschnitte jeder Tafel nach deren Bildung mittels Förderwegweichen (9) von den nicht ausgewählten Abschnitten separiert, wozu eine der Anzahl im Bereich der Ausgabestelle der Blechschneideeinrichtungen ausgegebener Abschnitte entsprechende Anzahl Förderwegweichen (9) vorgesehen sind, die von der Steueranordnung (6) angesteuert werden.

2. Verfahren nach Anspruch 1, dadurch gekennzeichnet, dass das Ausscheiden ferner in Abhängigkeit von Sensorsignalen von an der Steueranordnung angeschlossenen Sensoren (7-7"'; 8, 8'; 14) erfolgt.

3. Verfahren nach Anspruch 1 oder 2, dadurch gekennzeichnet, dass zur Auswahl der Abschnitte (A1-A6), B1-B6, C1-C6) ein Eingabemittel (16) vorgesehen ist, welches die Aufteilung der Blechtafel (1) in die einzelnen Abschnitte darstellt.

4. Vorrichtung zur Ausscheidung einzelner Blechabschnitte aus einer Mehrzahl von Blechabschnitten (A1-A6, B1-B6, C1-C6), die in einer Blechschneideeinrichtung aus einer Blechtafel (1) derart gebildet werden, dass aus aufeinanderfolgenden Tafeln (1) zunächst jeweils Blechstreifen (A, B, C) und aus jedem Blechstreifen eine Anzahl einzelner Abschnitte geschnitten werden, dadurch gekennzeichnet, dass die Vorrichtung eine Steueranordnung (6) und eine Förderanordnung (9, 15) aufweist, wobei die Förderanordnung zur Aufnahme der Anzahl Blechabschnitte ausgestaltet ist und für jeden Abschnitt eine von der Steueranordnung betätigbare Förderwegweiche (9) aufweist, und dass die Steueranordnung (6) ein Eingabemittel (16) aufweist, mittels welchem, und ohne Maschinenstillstand, sowohl einer wie auch mehrere von allen aus jeder Tafel zu bildenden Abschnitte (A1-A6, B1-B6, C1-C6) als mittels der zugehörigen Förderweiche auszuscheidender Abschnitt oder Abschnitte auswählbar ist.

5. Vorrichtung nach Anspruch 4, dadurch gekennzeichnet, dass die Steueranordnung (6) Eingänge für Sensoren (7-7"; 8, 8' 14) aufweist und zum Ausscheiden von Abschnitten in Abhängigkeit von den Sensorausgangssignalen ausgestaltet ist.

6. Vorrichtung nach Anspruch 4 oder 5, dadurch gekennzeichnet, dass die Steueranordnung (6) ein Eingabemittel (16) aufweist, welches die Aufteilung der Blechtafel (1) in die einzelnen Abschnitte darstellt.

7. Blechschneideeinrichtung zum Schneiden von Blechabschnitten (A1-A6, B1-B6, C1-C6) aus einer Blechtafel (1), mit einer ersten Scherenanordnung (4) zum Schneiden der Tafel (1) in mehrere Streifen (A, B; C) und einer zweiten Scherenanordnung (5) zum Schneiden der mehreren Abschnitte aus jedem Streifen, mit einer Fördernordnung (2, 3) zur Förderung der Tafeln, Streifen und Abschnitte von der Blechtafelzufuhrstelle bis zur Blechabschnittsausgabestelle, und mit einer Steueranordnung (6) für die Scherenanordnungen (4, 5) und die Förderanordnung (2, 3), dadurch gekennzeichnet, dass die Förderanordnung im Bereich der Blechabschnittsausgabestelle im Ausgabeweg für jeden Abschnitt eine von der Steueranordnung betätigbare Förderwegweiche (9) aufweist, und dass die Steueranordnung (6) ein Eingabemittel (16) aufweist, mittels welchem, und ohne Maschinenstillstand, einer wie auch mehrere von allen aus den Tafeln zu schneidenden Abschnitte (A1-A6, B1-B6, C1-C6) als mittels der zugehörigen Förderweiche auszuscheidender Abschnitt oder Abschnitte auswählbar ist.

8. Schneideeinrichtung nach Anspruch 7, dadurch gekennzeichnet, dass die Steueranordnung (6) Eingänge für Sensoren (7-7"; 8, 8' 14) aufweist, und zum Ausscheiden von Abschnitten in Abhängigkeit von den Sensorausgangssignalen ausgestaltet ist.

9. Schneideeinrichtung nach Anspruch 7 oder 8, dadurch gekennzeichnet, dass ein Eingabemittel vorgesehen ist, welches die Aufteilung der Blechtafel in die einzelnen Abschnitte darstellt.

## Claims

1. Method for eliminating individual selected sheet-metal blanks from a plurality of sheet-metal blanks (A1-A6, B1-B6, C1-C6) that have been produced in a sheet metal cutting line (3, 4, 5) from a series of metal sheets (1) by first cutting each sheet (1) into sheet-metal strips (A, B, C) and then cutting these strips into blanks (A1-A6, B1-B6, C1-C6), characterized in that a single one or a plurality of all the blanks to be produced from each sheet is or are selectable at a control arrangement (6) by means of the latter's input means (16), and in that if a defect (18) is present on the sheet (1) the affected blank or blanks (B4, B5) is or are selected by means of the input means (16), and in that the control arrangement separates the selected blanks in each sheet from the unselected blanks, after they have been produced, by means of conveyor-path switches (9), and the number of conveyor-path switches (9) triggered by the control arrangement (6) corresponds to the number of blanks discharged together at the discharge point of the sheet metal cutting line.

2. Method according to Claim 1, characterized in that elimination is also effected in response to signals from sensors (7-7"'; 8, 8'; 14) connected to the control arrangement.

3. Method according to Claim 1 or Claim 2, characterized in that an input means (16) with a display showing how the sheet (1) is divided up into individual blanks is provided so that blanks (A1-A6, B1-B6, C1-C6) can be selected.

4. Apparatus for the elimination of individual sheet-metal blanks from a plurality of sheet-metal blanks (A1-A6, B1-B6, C1-C6) that have been produced from a metal sheet (1) in a sheet metal cutting line (3, 4, 5) by first cutting a series of sheets (1) into sheet-metal strips (A, B, C) and [then] cutting each strip into a number of individual blanks, characterized in that the apparatus has a control arrangement (6) and a conveyor arrangement (9, 15), the conveyor arrangement being designed to receive the number of sheet-metal blanks and having for each blank a conveyor-path switch (9) which can be operated by the control arrangement, and in that the control arrangement (6) has an input means (16) by means of which, without having to stop the machine, a single one or a plurality of all the blanks to be produced from each sheet (A1-A6, B1-B6, C1-C6) can be selected as a blank or blanks to be eliminated by means of the corresponding conveyor-path switch [or switches].

5. Apparatus according to Claim 4, characterized in that the control arrangement (6) has inputs for sensors (7-7"'; 8, 8'; 14) and is configured to eliminate blanks in response to the sensor output signals.

6. Apparatus according to Claim 4 or Claim 5, characterized in that the control arrangement (6) has an input means with a display showing how the sheet (1) is divided up into individual blanks.

7. Sheet metal cutting line for cutting a metal sheet (1) into sheet-metal blanks (A1-A6, B1-B6, C1-C6), with a first shears arrangement (4) for cutting the sheet (1) into a number of strips (A, B; C) and a second shears arrangement (5) for cutting a number of blanks from each strip, with a conveyor arrangement (2, 3) for conveying sheets, strips and blanks from the metal sheet feed point to the sheet-metal blank discharge point, and with a control arrangement (6) for the shears arrangements (4, 5) and conveyor arrangement (2, 3), characterized in that the conveyor arrangement at the sheet-metal blank discharge point has a conveyor-path switch (9) which can be operated by the control arrangement in the discharge path of each blank, and in that the control arrangement (6) has an input means (16) by means of which, without having to stop the machine, a single one or a plurality of all the blanks to be cut out of the sheets (A1-A6, B1-B6, C1-C6) can be selected as a blank or blanks to be eliminated by means of the corresponding conveyor-path switch [or switches].

8. Cutting line according to Claim 7, characterized in that the control arrangement (6) has inputs for sensors (7-7"'; 8, 8'; 14) and is configured to eliminate blanks in response to the sensor output signals.

9. Cutting line according to Claim 7 or Claim 8, characterized in that an input means is provided which has a display showing how the sheet is divided up into individual blanks.

## Revendications

1. Procédé pour retirer des morceaux individuels déterminés de tôle parmi une multiplicité de morceaux de tôle (A1-A6, B1-B6, C1-C6), qui sont formés dans un dispositif (3,4,5) de découpage d'une tôle à partir de plaques de tôle successives (1) de telle sorte que tout d'abord on découpe respectivement des bandes de tôle (A,B,C) à partir de chaque plaque (1) et qu'à partir de ces bandes de tôle on découpe ensuite les morceaux (A1-A6, B1-B6, C1-C6), caractérisé en ce qu'aussi bien un morceau que plusieurs morceaux faisant partie de l'ensemble des morceaux devant être formés à partir de chaque plaque peut ou peuvent être sélectionnés au niveau d'un dispositif de commande (6), à l'aide des moyens d'entrée (16) de ce dispositif, et que dans le cas de la présence d'un défaut (18) dans la plaque (1) on sélectionne le ou les morceaux (B4,B5) concernés par le défaut, à l'aide du moyen d'entrée (16), et que le dispositif de commande sépare les morceaux sélectionnés de chaque plaque après leur formation, à l'aide d'aiguillages d'évacuation (9), des morceaux non sélectionnés, et qu'à cet effet il est prévu un certain nombre, qui correspond au nombre de morceaux délivrés dans la zone du poste de sortie des dispositifs de découpage de la tôle, d'aiguillages d'évacuation (9) qui sont commandés par le dispositif de commande (6) .

2. Procédé selon la revendication 1, caractérisé en ce que le retrait s'effectue en outre en fonction de signaux de capteurs (7-7"'; 8, 8'; 14) raccordés au dispositif de commande.

3. Procédé selon la revendication 1 ou 2, caractérisé en ce que pour la sélection des morceaux (A1-A6, B1-B6, C1-C6) il est prévu un moyen d'entrée (16) qui représente la division de la plaque de tôle (1) en les morceaux individuels.

4. Dispositif pour retirer des morceaux individuels déterminés de tôle parmi une multiplicité de morceaux de tôle (A1-A6, B1-B6, C1-C6), qui sont formés dans un dispositif de découpage d'une tôle à partir d'une plaque de tôle (1) de telle sorte qu'on découpe tout d'abord des bandes respectives de tôle (A,B,C) à partir de plaques successives (1) et qu'on découpe, à partir de chaque bande de tôle , un certain nombre de morceaux individuels, caractérisé en ce que le dispositif comporte un dispositif de commande (6) et un dispositif d'entraînement (9,15), le dispositif d'entraînement étant conçu pour recevoir le nombre de morceaux de tôle et comportant, pour chaque morceau, un aiguillage d'évacuation (9) pouvant être actionné par le dispositif de commande, et que le dispositif de commande (6) comporte un moyen d'entrée (16) à l'aide duquel un morceau ainsi que plusieurs morceaux parmi tous les morceaux (A1-A6, B1-B6, C1-C6) devant être formés à partir de chaque plaque peuvent être sélectionnés, et ce sans arrêt de la machine, en tant que morceau (x) devant être retiré(s) au moyen de l'aiguillage d'évacuation associé.

5. Dispositif selon la revendication 4, caractérisé en ce que le dispositif de commande (6) comporte des entrées pour des capteurs (7-7"; 8-8'; 14) et est agencé de manière à retirer des morceaux en fonction des signaux de sortie des capteurs.

6. Dispositif selon la revendication 4 ou 5, caractérisé en ce que le dispositif de commande (6) comporte un moyen d'entrée (16) qui représente la division de la plaque de tôle (1) en les morceaux individuels.

7. Dispositif de découpage de tôles pour découper des morceaux de tôle (A1-A6, B1-B6, C1-C6) d'une plaque de tôle (1), comportant un premier dispositif formant cisaille (4) pour découper la plaque (1) en plusieurs bandes (A, B; C), et un second dispositif formant cisaille (5) pour découper les différents morceaux à partir de chaque bande, et comportant un dispositif d'entraînement (2,3) pour entraîner les plaques, les bandes et les morceaux depuis le poste d'amenée de la plaque de tôle jusqu'au poste de sortie des morceaux de tôle, et comportant un dispositif de commande (6) pour les dispositifs formant cisaille (4,5) et le dispositif d'entraînement (2,3), caractérisé en ce que le dispositif d'entraînement comporte, dans la zone du point de sortie des morceaux de tôle dans le trajet de délivrance de chaque morceau, un aiguillage d'évacuation (9) qui peut être actionné par le dispositif de commande, et que le dispositif de commande (6) comporte des moyens d'entrée (16) à l'aide desquels un morceau ou plusieurs morceaux parmi l'ensemble des morceaux (A1-A6, B1-B6, C1-C6) devant être découpés à partir des plaques, peuvent être sélectionnés, et ce sans arrêt de la machine, en tant que morceau(x) devant être retiré(s) au moyen de l'aiguillage d'évacuation associé.

8. Dispositif de coupe selon la revendication 7, caractérisé en ce que le dispositif de commande (6) comporte des entrées pour des capteurs (7-7"; 8, 8'; 14) et est agencé pour retirer des morceaux en fonction des signaux de sortie des capteurs.

9. Dispositif de coupe selon la revendication 7 ou 8, caractérisé en ce qu'il est prévu un moyen d'entrée qui représente la division de la plaque de tôle en les morceaux individuels.
